# EUROPEAN PATENT APPLICATION

(11) **EP 4 801 118 A1**
(43) Date of publication of application: **02.09.2026**
(21) Application number: 23956304.2
(22) Date of filing: 23.10.2023
(51) Int. Cl.: H04W 52/02

(54) **DETERMINATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIAO, Kai, Beijing 100085 (CN); FU, Ting, Beijing 100085 (CN); HONG, Wei, Beijing 100085 (CN)
(74) Representative: Dehns Germany Partnerschaft mbB
(86) International application number: PCT/CN2023/125975
(87) International publication number: WO 2025/086047

(57) **Abstract**

The present disclosure provides a determination method and apparatus, a device, and a storage medium. The method comprises: determining a first period and a second period, the first period being a transmission period of a first signal set, the second period being a transmission period of a second signal set, the first signal set comprising at least one first signal, the second signal set comprising at least one second signal, the first signal being at least used for time-frequency synchronization during the reception of a third signal, the third signal being used for at least one of the following: waking up a main radio (MR) of a terminal, not waking up the MR, and changing a sleep state of the MR, and the second signal being used by the terminal to perform time-frequency synchronization with a network device; and on the basis of a first number and a second number, determining the correspondence between the first signal and the second signal, the first number being the number of first signals in the first period, the second number being the number of second signals in the second period, and the first signal and the second signal having the correspondence sharing a same beam. The method of the present disclosure can achieve the transmission of the first signals.

## Description

### TECHNICAL FIELD

The present disclosure relates to the technical field of communication, and in particular, to a determination method and apparatus, a communication device, a communication system, and a storage medium.

### BACKGROUND

In Rel-18, a low power wake up signal (LP WUS) is introduced. LP WUS is sent by a network device to a terminal, and can be received by a low power wake up receiver (LP-WUR) of the terminal. LP WUS can be used to instruct the terminal to wake up the main radio (MR), or not wake up the MR, or change the sleep state of the MR, such as switching between ultra-deep sleep, deep sleep, light sleep, micro sleep, etc., so as to save power. Optionally, LP WUS may be used for terminals in the Radio Resource Control (RRC) connected, inactive, idle and other states. Optionally, there are two working modes of LP WUR, one is always ON and the other is duty cycle. For the always ON mode, the LP WUR of the terminal is always in the on state, and the network device can send LP WUS at any time to wake up the terminal. For duty cycle mode, the terminal turns on LP WUR only during the listening time window of LP WUS according to a certain mechanism, and the network device can only send LP WUS to wake up the terminal during this time period.

### SUMMARY

The present disclosure proposes a determination method and apparatus, a communication device, a communication system, and a storage medium.

According to a first aspect of the embodiments of the present disclosure, a determination method is proposed, including:
determining, by a terminal, a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and a network device; and
determining, by the terminal, a corresponding relationship between the first signal and the second signal based on a first number N and a second number M; where the first number N is: a number of the first signal in the first period, and the second number M is: a number of the second signal in the second period; the first signal and the second signal having the corresponding relationship share a same beam, and N and M are positive integers.

According to a second aspect of the embodiments of the present disclosure, a determination method is proposed, including:
determining, by a network device, a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between a terminal and the network device; and
determining, by the network device, a corresponding relationship between the first signal and the second signal based on a first number N and a second number M; where the first number N is: a number of the first signal in the first period, and the second number M is: a number of the second signal in the second period; the first signal and the second signal having the corresponding relationship share a same beam, and N and M are positive integers.

According to a third aspect of the embodiments of the present disclosure, a determination method is proposed for a communication system, the communication system includes a terminal and a network device, and the method includes at least one of:
the network device determining a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and the network device;
the network device determining a corresponding relationship between the first signal and the second signal based on a first number N and a second number M; where the first number N is a number of the first signal in the first period, and the second number M is a number of the second signal in the second period; the first signal and the second signal having the corresponding relationship share a same beam, and N and M are positive integers;
the network device determining a beam corresponding to the second signal based on a protocol agreement and/or the network device;
sending the first signal having the corresponding relationship with the second signal based on the beam corresponding to the second signal;
the terminal determining the first period and the second period;
the terminal determining the corresponding relationship between the first signal and the second signal based on the first number N and the second number M;
the terminal determining the beam corresponding to the second signal based on a protocol agreement and/or a configuration of the network device; and
the terminal receiving the first signal having the corresponding relationship with the second signal based on the beam corresponding to the second signal.

According to a fourth aspect of the embodiments of the present disclosure, a terminal is provided, including:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and a network device;
the processing module is further configured to determine a corresponding relationship between the first signal and the second signal based on a first number N and a second number M; where the first number N is: a number of the first signal in the first period, and the second number M is: a number of the second signal in the second period; the first signal and the second signal having the corresponding relationship share a same beam, and N and M are positive integers.

According to a fifth aspect of the embodiments of the present disclosure, a network device is provided, including:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of: wake up a main radio (MR) of the terminal, not waking up the MR, changing a sleep state of the MR; the second signal is used for time and frequency synchronization between a terminal and the network device;
the processing module is further configured to determine a corresponding relationship between the first signal and the second signal based on a first number N and a second number M; where the first number N is: a number of the first signal in the first period, and the second number M is: a number of the second signal in the second period; the first signal and the second signal having the corresponding relationship share a same beam, and N and M are positive integers.

According to a sixth aspect of the embodiments of the present disclosure, a communication device is provided, including:
one or more processors;
where the processor is configured to call instructions so that the communication device executes the determination method described in the first aspect or the second aspect.

According to the seventh aspect of the embodiments of the present disclosure, a communication system is proposed, including a terminal and a network device, where the terminal is configured to implement the determination method described in the first aspect, and the network device is configured to implement the determination method described in the second aspect.

According to an eighth aspect of the embodiments of the present disclosure, a storage medium is proposed, where the storage medium stores instructions, and when the instructions are executed on a communication device, the communication device executes the determination method as described in the first aspect or the second aspect.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1 is a schematic diagram of an architecture of some communication systems provided by embodiments of the present disclosure;
FIG. 2A1 is an interactive schematic diagram of a determination method provided by an embodiment of the present disclosure;

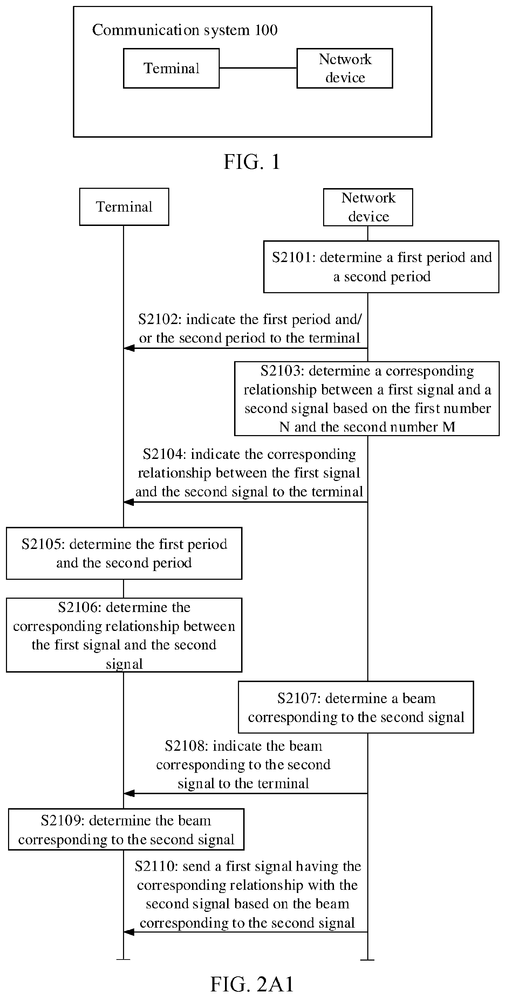

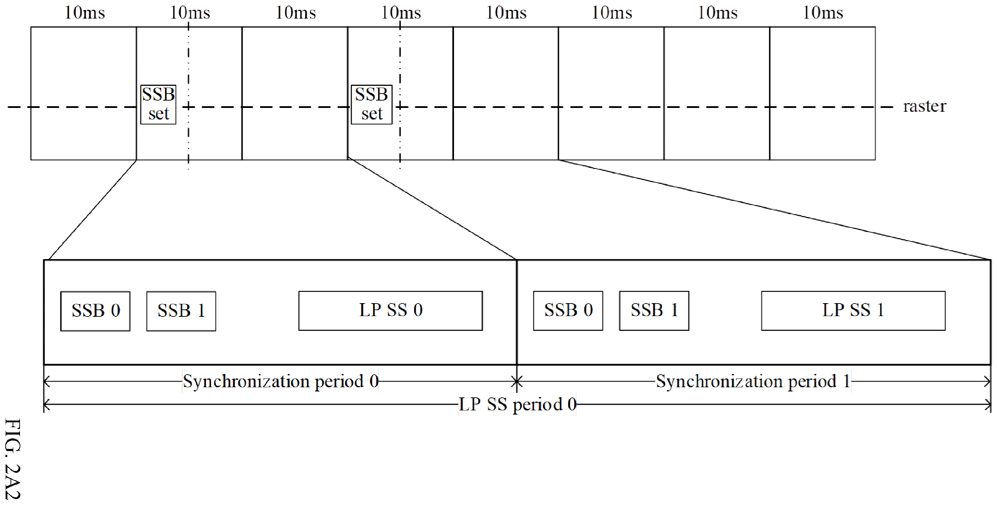

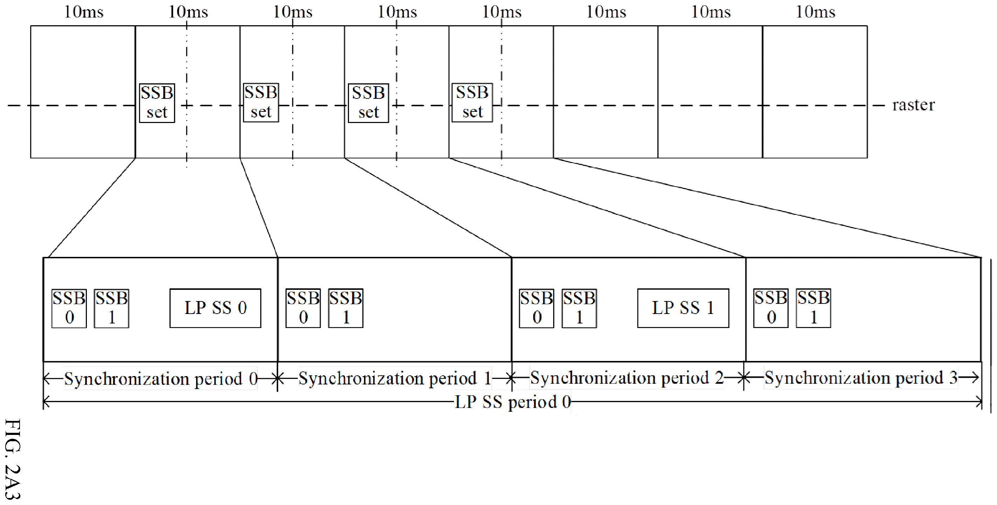

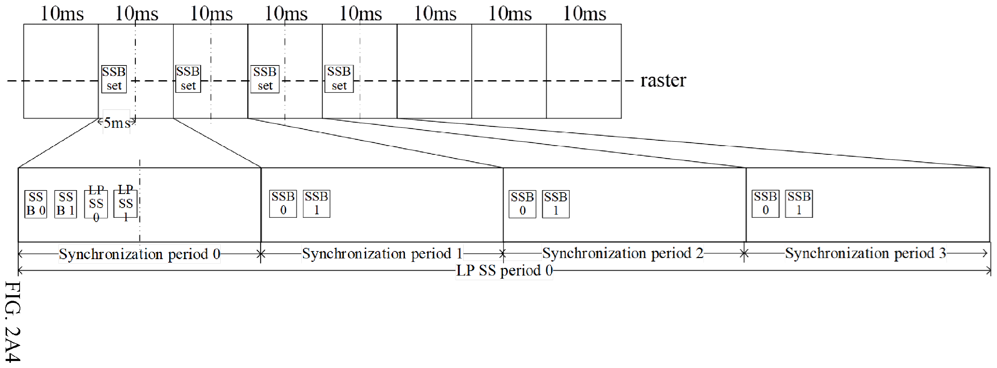

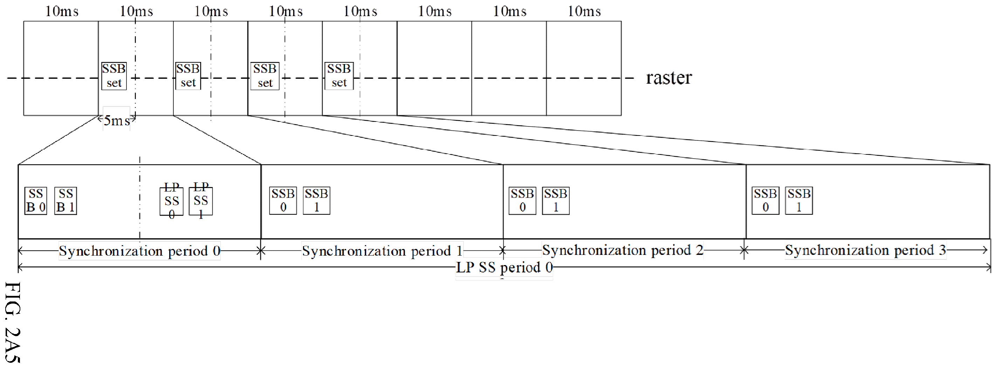

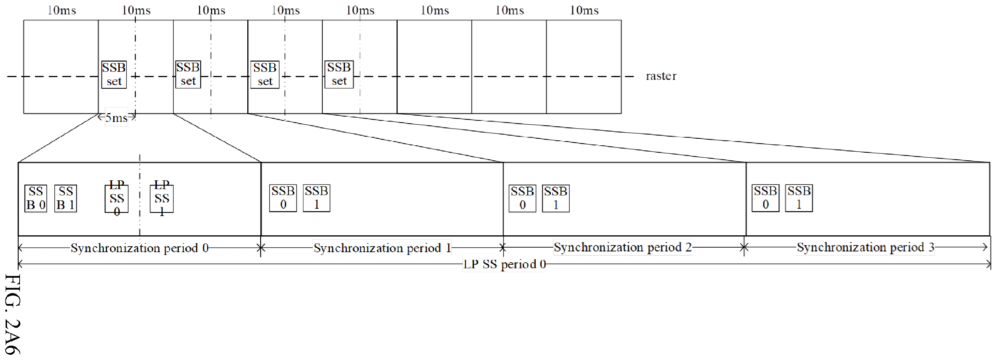

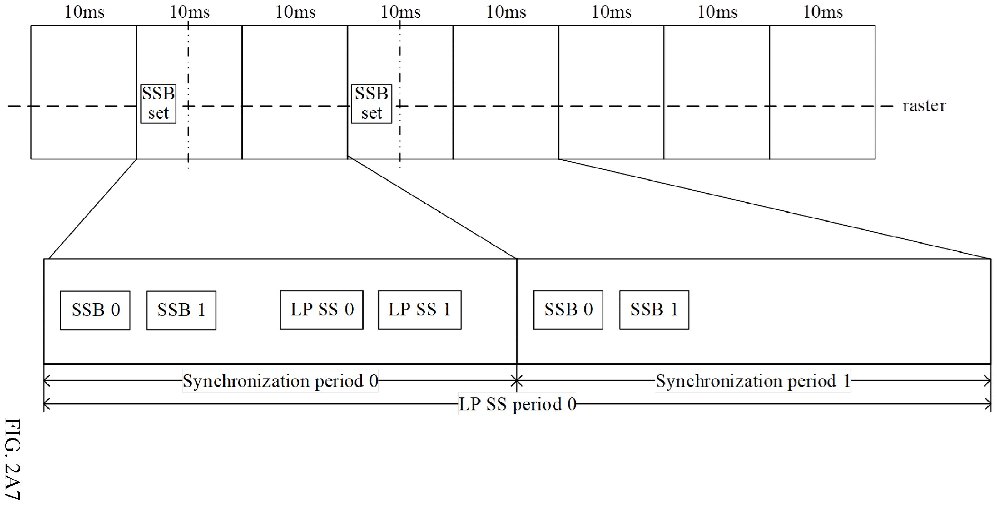

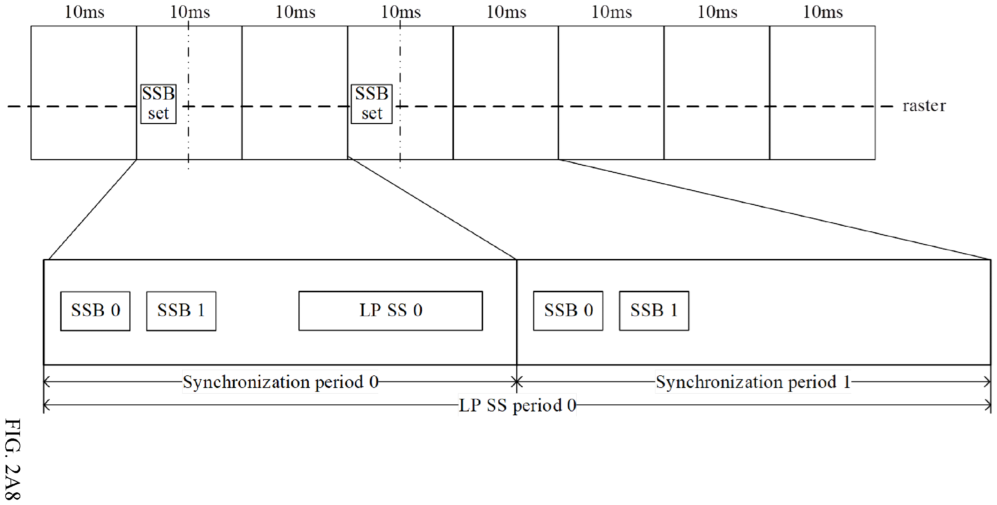

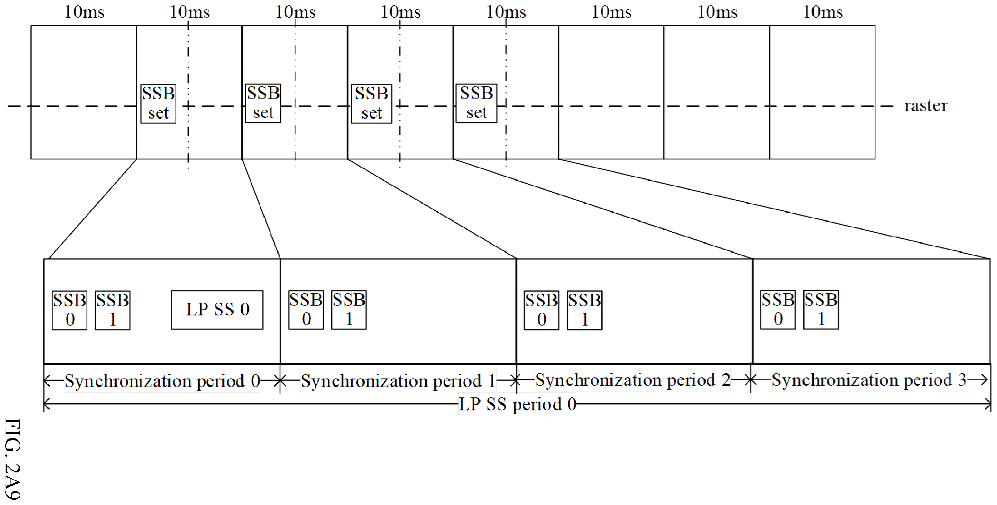

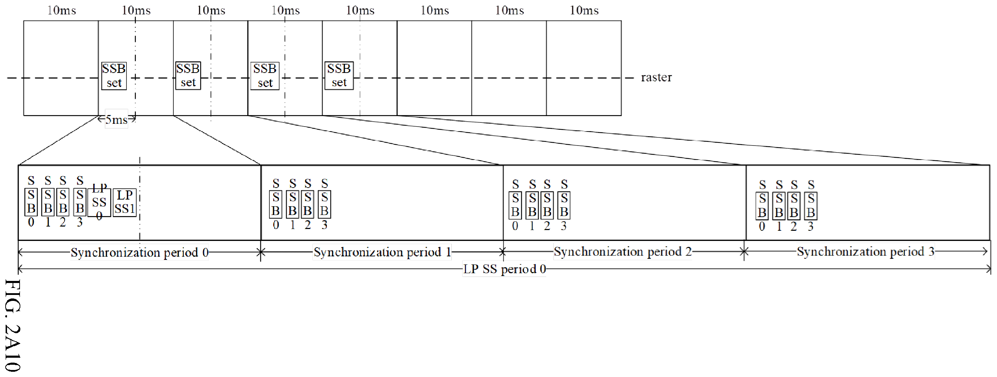

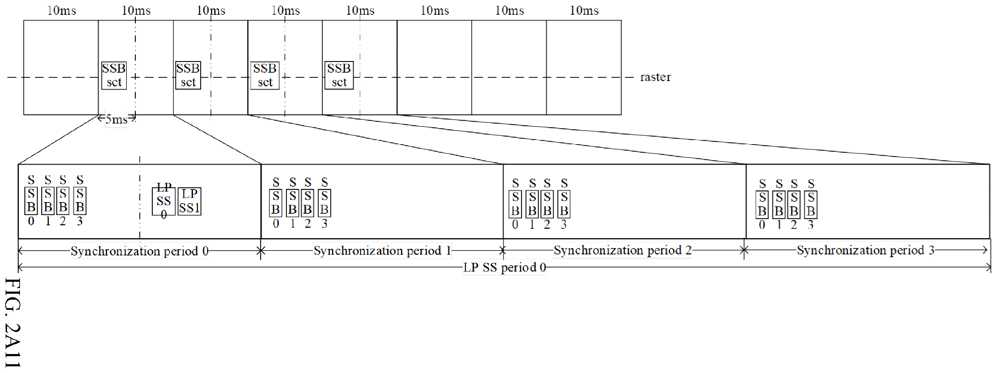

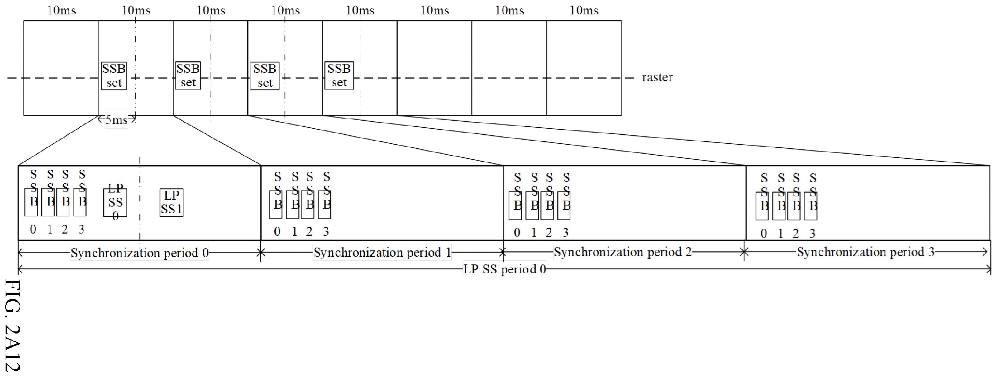

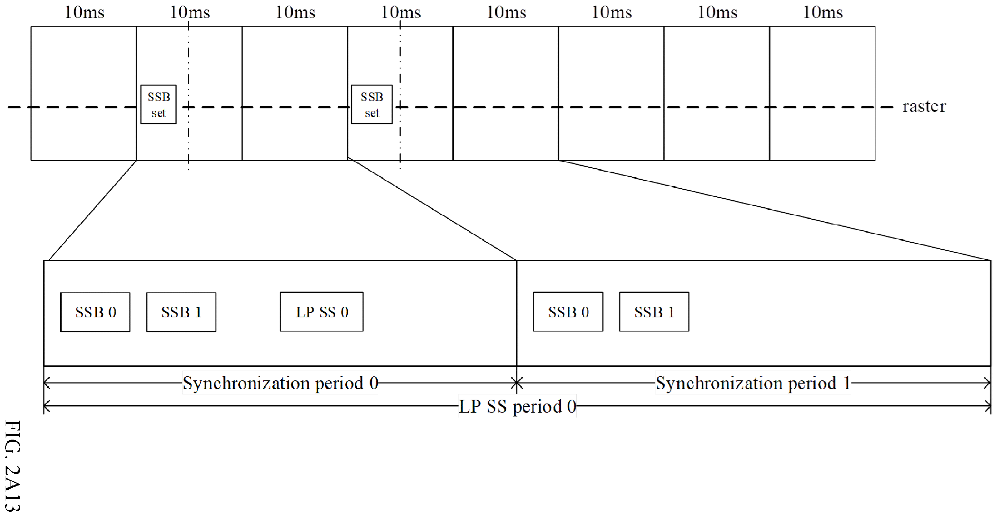

FIGs. 2A2 to 2A13 are schematic diagrams of corresponding relationships between the first signal and the second signal according to the embodiments of the present disclosure;

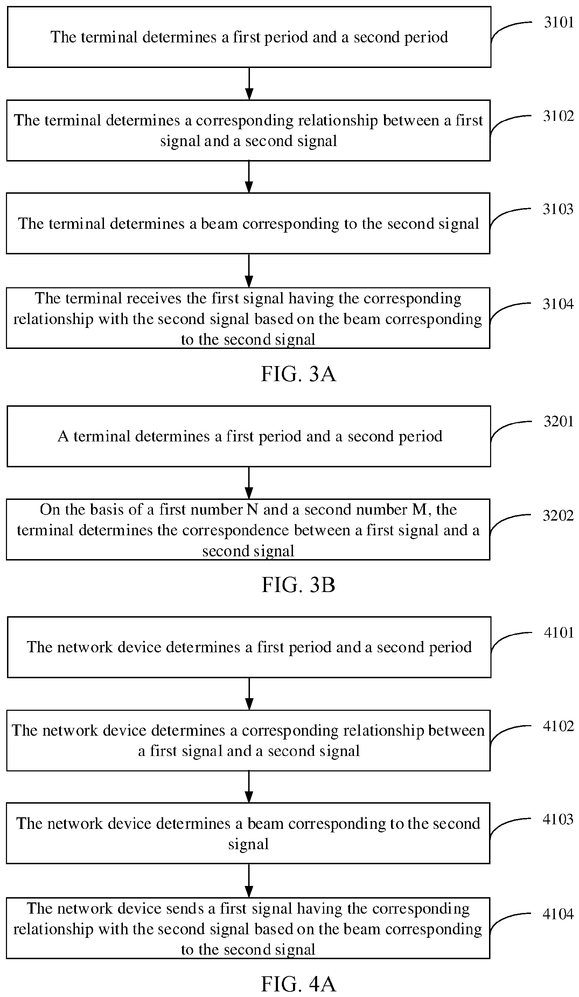

FIGs. 3A to 3B are flowcharts of a determination method provided in yet another embodiment of the present disclosure;
FIGs. 4A-4B are flowcharts of a determination method provided in yet another embodiment of the present disclosure;

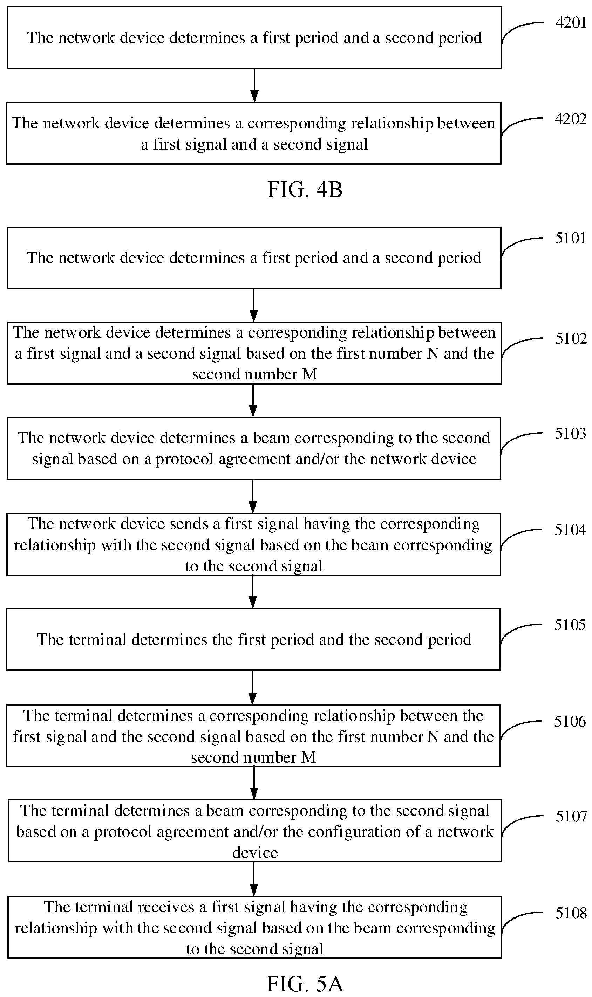

FIG. 5A is a flowchart of a determination method provided in yet another embodiment of the present disclosure;

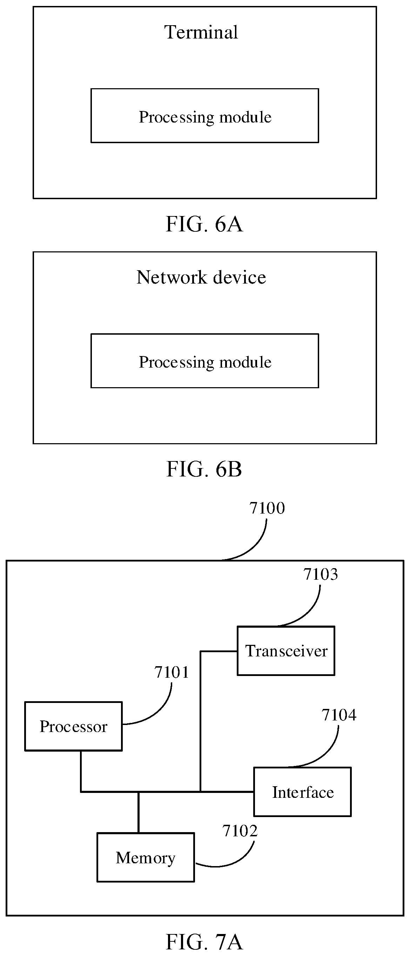

FIG. 6A is a schematic diagram of a structure of a terminal provided by an embodiment of the present disclosure;
FIG. 6B is a schematic diagram of a structure of a network device provided by an embodiment of the present disclosure;
FIG. 7A is a schematic diagram of a structure of a communication device provided by an embodiment of the present disclosure;

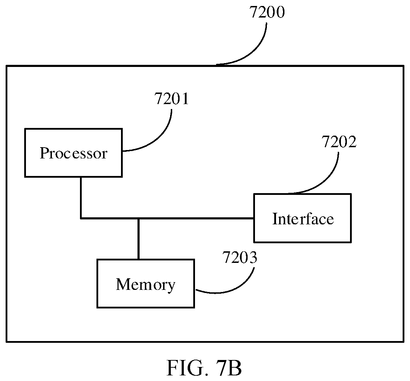

FIG. 7B is a schematic diagram of a structure of a chip provided by an embodiment of the present disclosure.

### DETAILED DESCRIPTION

The embodiments of the present disclosure provide a determination method and apparatus, a communication device, a communication system, and a storage medium.

In the first aspect, an embodiment of the present disclosure provides a determination method, which is performed by a terminal, and the method includes at least one of the following:
the terminal determining a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for the terminal to perform time-frequency synchronization with the network device; and
the terminal determining a corresponding relationship between the first signal and the second signal based on a first number N and a second number M; where the first number N is: the number of the first signal in the first period, and the second number M is: the number of the second signal in the second period; the first signal and the second signal having the corresponding relationship share the same beam, and N and M are positive integers.

In the above embodiment, a method for a terminal to determine the corresponding relationship between a first signal and a second signal is provided, where the first signal and the second signal having the corresponding relationship share the same beam, and since the beam used by the second signal can be predetermined by the terminal (for example, it can be determined by the terminal through blind detection when initially accessing the network, or determined based on a protocol agreement, or determined based on an indication of the network device), the terminal can receive the first signal having a corresponding relationship with the second signal based on the beam corresponding to the second signal according to the corresponding relationship, thereby achieving successful transmission of the first signal.

In combination with some embodiments of the first aspect, in some embodiments, determining the first period and the second period includes at least one of the following:
determining the first period and the second period based on a protocol agreement;
receiving the first period and the second period indicated by the network device;
receiving the first period indicated by the network device, and determining the second period based on a protocol agreement;
receiving the second period indicated by the network device, and determining the first period based on a protocol agreement.

In combination with some embodiments of the first aspect, in some embodiments, the first period includes at least one second period; or
the first period includes at least one second period, and a starting position of the first period is the same as a starting position of the second period; or
the first period is an integer multiple of the second period; or
the first period is an integer multiple of the second period, and the starting position of the first period is the same as the starting position of the second period.

In combination with some embodiments of the first aspect, in some embodiments, determining the corresponding relationship between the first signal and the second signal based on the first number N and the second number M includes at least one of the following:
the first number N being equal to the second number M, and determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in the same frame, and determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively;
the first number N being less than the second number M, and the first signal set being located in the second period, determining that the N first signals in the first period have the corresponding relationship with any N second signals in the second period, respectively.

In the above embodiment, the method is provided for how the terminal specifically determines the corresponding relationship between a first signal and a second signal, so that the terminal can successfully determine the corresponding relationship between the first signal and the second signal, and then the terminal can subsequently receive the first signal that has the corresponding relationship with the second signal based on a beam corresponding to the second signal according to the corresponding relationship, thereby achieving successful transmission of the first signal.

In combination with some embodiments of the first aspect, in some embodiments, the method further includes:
the terminal determining a beam corresponding to the second signal based on a protocol agreement and/or a configuration of the network device;
the terminal receiving the first signal having the corresponding relationship with the second signal based on the beam corresponding to the second signal.

In the above embodiment, after the terminal determines the corresponding relationship between the first signal and the second signal, the terminal can receive the first signal that has a corresponding relationship with the second signal based on the beam corresponding to the second signal according to the corresponding relationship, thereby achieving successful transmission of the first signal.

In the second aspect, an embodiment of the present disclosure provides a determination method, which is performed by a network device, and the method includes at least one of the following:
the network device determining a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and the network device; and
the network device determining a corresponding relationship between the first signal and the second signal based on a first number N and a second number M; where the first number N is: a number of the first signal in the first period, and the second number M is: a number of the second signal in the second period; the first signal and the second signal having the corresponding relationship share a same beam, and N and M are positive integers.

In the above embodiment, a method for the network device to determine a corresponding relationship between a first signal and a second signal is provided, where the first signal and the second signal having the corresponding relationship share the same beam, and since the beam used by the second signal can be predetermined by the terminal (for example, it can be determined by blind detection when the terminal initially accesses the network), the network device can send the first signal having the corresponding relationship with the second signal based on the beam corresponding to the second signal according to the corresponding relationship, thereby achieving successful transmission of the first signal.

In combination with some embodiments of the second aspect, in some embodiments, determining the first period and the second period includes at least one of the following:
determining the first period and the second period based on a protocol agreement;
the network device determining the first period and the second period;
the network device determining the first period, and determining the second period based on a protocol agreement;
the network device determining the second period, and determining the first period based on a protocol agreement.

In combination with some embodiments of the second aspect, in some embodiments, the method further includes:
the network device indicating the first period and/or the second period to the terminal.

In combination with some embodiments of the second aspect, in some embodiments, the first period includes at least one second period; or
the first period includes at least one second period, and a starting position of the first period is the same as a starting position of the second period; or
the first period is an integer multiple of the second period; or
the first period is an integer multiple of the second period, and the starting position of the first period is the same as the starting position of the second period.

In combination with some embodiments of the second aspect, in some embodiments, determining the corresponding relationship between the first signal and the second signal based on the first number N and the second number M includes at least one of the following:
the first number N being equal to the second number M, determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in a same frame, determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

In combination with some embodiments of the second aspect, in some embodiments, the method further includes:
the network device determining a beam corresponding to the second signal based on a protocol agreement and/or the network device; and
sending the first signal having the corresponding relationship with the second signal based on the beam corresponding to the second signal.

In combination with some embodiments of the second aspect, in some embodiments, the method further includes:
the network device configuring the beam corresponding to the second signal to the terminal.

In the third aspect, an embodiment of the present disclosure provides a determination method for a communication system, where the communication system includes a terminal and a network device. The method includes at least one of the following:
the network device determining a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and the network device;
the network device determining a corresponding relationship between the first signal and the second signal based on a first number N and a second number M; where the first number N is the number of the first signal(s) in the first period, and the second number M is the number of the second signal(s) in the second period; the first signal and the second signal having the corresponding relationship share the same beam, and N and M are positive integers;
the network device determining a beam corresponding to the second signal based on a protocol agreement and/or the network device;
sending the first signal having the corresponding relationship with the second signal based on the beam corresponding to the second signal;
the terminal determining the first period and the second period;
the terminal determining the corresponding relationship between the first signal and the second signal based on the first number N and the second number M;
the terminal determining the beam corresponding to the second signal based on a protocol agreement and/or a configuration of the network device; and
the terminal receiving the first signal having the corresponding relationship with the second signal based on the beam corresponding to the second signal.

In the fourth aspect, an embodiment of the present disclosure provides a terminal, including at least one of the following:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and a network device;
the processing module is further configured to determine a corresponding relationship between the first signal and the second signal based on a first number N and a second number M; where the first number N is: the number of the first signal(s) in the first period, and the second number M is: the number of the second signal(s) in the second period; the first signal and the second signal that have the corresponding relationship share the same beam, and N and M are positive integers.

In the fifth aspect, an embodiment of the present disclosure provides a network device, including at least one of the following:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and a network device;
the processing module is further configured to determine a corresponding relationship between the first signal and the second signal based on a first number N and a second number M; where the first number N is the number of the first signal(s) in the first period, and the second number M is the number of the second signal(s) in the second period; the first signal and the second signal that have a corresponding relationship share the same beam, and N and M are positive integers.

In the sixth aspect, an embodiment of the present disclosure proposes a communication device, where the communication device includes: one or more processors; and one or more memories for storing instructions; where the processor is configured to call the instructions so that the communication device executes the determination method described in the first aspect, the optional implementations of the first aspect, the second aspect, and the optional implementations of the second aspect.

In the seventh aspect, an embodiment of the present disclosure proposes a communication system, which includes: a terminal and a network device; where the terminal is configured to execute the method described in the first aspect and the optional implementations of the first aspect, and the network device is configured to execute the method described in the second aspect and the optional implementations of the second aspect.

In the eighth aspect, an embodiment of the present disclosure proposes a storage medium, where the storage medium stores instructions. When the instructions are executed on a communication device, the communication device executes the determination method described in the first aspect, the optional implementations of the first aspect, the second aspect, and the optional implementations of the second aspect.

In the ninth aspect, an embodiment of the present disclosure proposes a program product. When the program product is executed by a communication device, the communication device executes the determination method described in the first aspect, the optional implementations of the first aspect, the second aspect, and the optional implementations of the second aspect.

In the tenth aspect, an embodiment of the present disclosure proposes a computer program, which, when executed on a computer, enables the computer to execute the determination method described in the first aspect, the optional implementations of the first aspect, the second aspect, and the optional implementations of the second aspect.

It is understandable that the above-mentioned terminals, network devices, communication devices, communication systems, storage media, program products, and computer programs are all used to execute the methods proposed in the embodiments of the present disclosure. Therefore, the beneficial effects that can be achieved can refer to the beneficial effects in the corresponding methods, which will not be repeated here.

The present disclosure proposes the title of the present disclosure. In some embodiments, the terms such as determination method, information processing method, information sending method, information receiving method, etc. can be replaced with each other, the terms such as communication apparatus, information processing apparatus, information sending apparatus, information receiving apparatus, etc. can be replaced with each other, and the terms such as information processing system, communication system, information sending system, information receiving system, etc. can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in singular form, such as "a", "an", "the", "above", "said", "aforementioned", "this", etc., may mean "one and only one", or "one or more", "at least one", etc. For example, when using articles such as "a", "an", "the" in English in translation, the noun following the article can be understood as a singular expression or a plural expression.

In the embodiments of the present disclosure, "a plurality of" refers to two or more.

In some embodiments, the terms "at least one of", "one or more", "a plurality of", "multiple", etc. can be used interchangeably.

In the embodiments of the present disclosure, descriptions such as "at least one of A, B, C...", "A and/or B and/or C...", etc. include the situation where any one of A, B, C... exists alone, and also include the situation of any combination of any number of A, B, C..., and each situation can exist alone. For example, "at least one of A, B, C" includes the situations where A exists alone, B exists alone, C exists alone, the combination of A and B, the combination of A and C, the combination of B and C, and the combination of A, B and C. For example, A and/or B includes the situations where A exists alone, B exists alone, and the combination of A and B.

In some embodiments, the descriptions such as "in one case, A, in another case, B", "in response to one case, A, in response to another case, B", etc. may include the following technical solutions according to the situation: A is executed independently of B, that is, in some embodiments, A; B is executed independently of A, that is, in some embodiments, B; A and B are selectively executed, that is, selected from A and B in some embodiments; A and B are both executed, that is, A and B in some embodiments. When there are more branches such as A, B, C, etc., it is similar to the above.

The prefixes such as "first" and "second" in the embodiments of the present disclosure are only used to distinguish different description objects, and do not constitute restrictions on the position, order, priority, quantity or content of the description objects. The statement of the description object refers to the description in the claims or the context of embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second signal" may be the same information or different information, and their contents may be the same or different.

In some embodiments, "including A", "containing A", "used to indicate A", and "carrying A" can be interpreted as directly carrying A or indirectly indicating A.

In some embodiments, terms such as "in response to...", "in response to determining...", "in the case of...", "at the time of...", "when...", "if...", "in case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, the apparatus and the like can be interpreted as physical or virtual, and its name is not limited to that described in the embodiments. The terms such as apparatus, equipment, device, circuit, network element, node, function, unit, section, system, network, chip, chip system, and entity are interchangeable.

In some embodiments, "network" may be interpreted as the apparatus included in the network (e.g., an access network device, a core network device, etc.).

In some embodiments, the terms such as "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" can be used interchangeably.

In some embodiments, the terms "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, it can also be set as a structure in which the terminal has all or part of the functions of the access network device. In addition, the language such as "uplink" and "downlink" can also be replaced by the language corresponding to the communication between the terminals (for example, "side"). For example, the uplink channel, the downlink channel, etc. can be replaced by the side channel, and the uplink, the downlink, etc. can be replaced by the sidelink.

In some embodiments, the terminal can be replaced by an access network device, a core network device, or a network device. In this case, the access network device, the core network device, or the network device can also be configured to have a structure that has all or part of the functions of the terminal.

In some embodiments, acquisition of data, information, etc. can comply with the laws and regulations of the country where the data is obtained.

In some embodiments, data, information, etc. can be obtained with the user's consent.

In addition, each element, each row, or each column in the table of the embodiments of the present disclosure can be implemented as an independent embodiment, and the combination of any elements, any rows, and any columns can also be implemented as an independent embodiment.

The corresponding relationships shown in the tables in the present disclosure can be configured or predefined. The values of the information in each table are only examples and can be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate deformation adjustments can be made based on the above table, such as splitting, merging, etc. The names of the parameters shown in the titles of the above tables can also use other names that can be understood by the communication apparatus, and the values or representations of the parameters can also be other values or representations that can be understood by the communication apparatus. When implementing the above tables, other data structures can also be used, such as arrays, queues, containers, stacks, linear lists, pointers, linked lists, trees, graphs, structures, classes, heaps, hashtables or hash tables.

The predefined in the present disclosure may be understood as defined, defined in advance, stored, pre-stored, pre-negotiated, pre-configured, solidified, or pre-burned.

FIG. 1A is a schematic diagram of the architecture of a communication system according to an embodiment of the present disclosure. As shown in FIG. 1A, a communication system 100 may include a terminal and a network device. Optionally, the network device may include at least one of an access network device and a core network device.

In some embodiments, the terminal includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to these.

In some embodiments, the access network device is, for example, a node or device that accesses a terminal to a wireless network. The access network device may include at least one of an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a wireless fidelity (WiFi) system, but is not limited thereto.

In some embodiments, the technical solution of the present disclosure can be applicable to the Open RAN architecture. In this case, the interface between the access network devices or within the access network device involved in the embodiments of the present disclosure may become an internal interface of Open RAN, and the processes and information interactions between these internal interfaces can be implemented through software or programs.

In some embodiments, the access network device can be composed of a central unit (CU) and a distributed unit (DU), where the CU may also be referred to as a control unit. Adopting the CU-DU structure, the protocol layer of the access network device can be separated, with some functions of the protocol layer being centrally controlled by the CU, and the remaining functions of some or all of the protocol layers being distributed in the DU, and the CU centrally controls the DU, but not limited thereto.

In some embodiments, the core network device may be a device including one or more network elements, or may be a plurality of devices or a device group, each including all or part of one or more network elements. The network element may be virtual or physical. The core network may include, for example, at least one of an Evolved Packet Core (EPC), a 5G Core Network (5GCN), and a Next Generation Core (NGC). Alternatively, the core network device may also be a location management function network element. Exemplarily, the location management function network element includes a location server, which may be implemented as any one of the following: a location management function (LMF), an Enhanced Serving Mobile Location Centre (E-SMLC), a Secure User Plane Location (SUPL), and a Secure User Plane Location Platform (SUPLLP).

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure can be applied to the communication system 100 shown in FIG. 1A, or part of the subject, but are not limited thereto. The subjects shown in FIG. 1A are examples, and the communication system may include all or part of the subjects in FIG. 1A, or may include other subjects other than FIG. 1A, and the number and form of the subjects are arbitrary. The connection relationship between the subjects is an example, and the subjects may be connected or disconnected. The connection may be in any manner, which may be a direct connection or an indirect connection, and may be a wired connection or a wireless connection.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark)), Public Land Mobile Network (PLMN) network, Device to Device (D2D) system, Machine to Machine (M2M) system, Internet of Things (IoT) system, Vehicle to-Everything (V2X), system using other determination methods, next generation system expanded based on them, and the like. In addition, a number of systems can also be applied in combination (for example, combination of LTE or LTE-A with 5G, and the like).

Optionally, referring to the above-mentioned related art, considering the time-frequency offset during the operation of the LP WUR, Low Power Synchronization Signals (LP SSs) are introduced, where the LP SS is at least used to achieve time-frequency synchronization during LP WUS reception. Optionally, the LP SS may include, for example, time-frequency synchronization information, cell (Identity, ID) and other information of the LP WUS. After receiving the LP SS, the terminal can implement time-frequency synchronization reception of the LP WUS based on the information carried in the LP SS, and then wake up the MR or change the sleep state or not wake up the MR based on the information carried by the LP WUS.

However, how to determine the transmission resource of LP SS between the network device and the terminal is a technical problem that needs to be solved urgently.

FIG. 2A1 is an interactive schematic diagram of a determination method according to an embodiment of the present disclosure. As shown in FIG. 2A1, an embodiment of the present disclosure relates to a determination method, which is applied in the communication system 100, and the method includes the following steps.

In **step 2101**, the network device determines a first period and a second period.

Optionally, the first period is a transmission period of a first signal set, and the second period is a transmission period of a second signal set; the first signal set includes at least one first signal, and the second signal set includes at least one second signal; the first signal is at least used to achieve time and frequency synchronization when a third signal is received, and the third signal is used for at least one of the following: waking up a main radio (MR) of the terminal, not waking up the MR, and changing the sleep state of the MR; the second signal is used for time and frequency synchronization between the terminal and the network device.

The relationship among the first signal, the second signal, the third signal, the first signal set, and the second signal set is described in detail below.

Optionally, the network device usually needs to send the third signal to the terminal to wake up the MR of the terminal, or not wake up the MR of the terminal, or change the sleep state of the MR. Optionally, for example, the above-mentioned "waking up the MR of the terminal" can be understood as: switching the MR of the terminal from the sleep state to the wake-up state, where when the MR is in the wake-up state, the terminal can normally process downlink and/or uplink data by using the MR; when the terminal does not need to process downlink and/or uplink data, the MR can be in the sleep state to save power. Optionally, for example, the above-mentioned "not waking up the MR" can be understood as: switching the MR from the wake-up state to the sleep state, or allowing the MR to continue to maintain the sleep state, so as to achieve the purpose of saving power. Optionally, the sleep state of the MR can include at least one of the following: ultra-deep sleep, deep sleep, light sleep, micro sleep and other states, and the above-mentioned "changing the sleep state of the MR" can be understood as: switching among any different sleep states of ultra-deep sleep, deep sleep, light sleep, micro sleep and other states, for example. The power consumed by the terminal when maintaining different sleep states is different. Therefore, the network device can send a third signal to the terminal to instruct the terminal to change the sleep state of the MR for the purpose of saving the power of the terminal.

Optionally, the above-mentioned first signal can be used to achieve time-frequency synchronization when receiving the third signal. The time-frequency synchronization can, for example, include at least one of the following: time domain synchronization, frequency domain synchronization, time domain and frequency domain synchronization. Optionally, the first signal can carry time-frequency synchronization information, a cell (Identity, ID), etc. corresponding to the third signal, and, in some embodiments, the terminal usually needs to receive the first signal first, and perform time-frequency synchronization reception of the third signal based on the information carried in the first signal.

Optionally, in some embodiments, the working modes of the first signal generally include the following: one is to configure one first signal for each cell, in which case all terminals in the cell complete the time-frequency synchronization reception of the third signal through the first signal, or another is to configure one first signal for each terminal, in which case each terminal completes the time-frequency synchronization reception of the third signal through its corresponding first signal, or another is to configure one first signal for each terminal group (or UE group), in which case the terminals in each terminal group complete the time-frequency synchronization reception of the third signal through their corresponding first signals, and thus multiple first signals may appear. At this time, the concept of the first signal set is introduced. The first signal set may include at least one first signal. Optionally, the first signal set may include one first signal, and at this time, it means that one first signal is configured for each cell. Alternatively, the first signal set may include multiple first signals, and at this time, it means that one first signal is configured for each terminal or each terminal group (or UE group).

Optionally, in some embodiments, the first signal may be, for example, LP SS, the first signal set may be, for example, LP SS set, and the third signal may be, for example, LP WUS, but is not limited thereto. Optionally, the terminal mentioned in the embodiments of the present disclosure may be a terminal supporting LP WUS.

Optionally, the above-mentioned second signal can be used for time-frequency synchronization between the terminal and the network device. For example, when the terminal initially accesses the network, it is usually necessary to receive the second signal to achieve time-frequency synchronization between the terminal and the network device. The second signal can be, for example, a Synchronization Signal Block (SSB). Optionally, multiple second signals can constitute a second signal set, and the second signal set can be, for example, an SSB set.

Optionally, the first period can be called an LP SS period, for example, and the second period can be called a synchronization period, for example.

Optionally, in some embodiments, the method for the network device to determine the first period and the second period may include:
determining the first period and the second period based on a protocol agreement;
the network device determining the first period and the second period;
the network device determining the first period, and determining the second period based on a protocol agreement;
the network device determining the second period, and determining the first period based on the protocol agreement.

Optionally, in some embodiments, the first period may include at least one second period; or
the first period may include at least one second period, and the starting position of the first period is the same as the starting position of the second period; or
the first period may be an integer multiple of the second period; or
the first period may be an integer multiple of the second period, and the starting position of the first period is the same as the starting position of the second period.

Optionally, the above-mentioned "the first period includes at least one second period" can be understood as: the first period includes at least one second period, and the first period is not an integer multiple of the second period, or the first period includes at least one second period, and the first period is an integer multiple of the second period.

Optionally, after the first period and the second period are determined, it can be understood that the number of the first signals included in the first period and the number of the second signals included in the second period are synchronously known.

In **step 2102**, the network device indicates the first period and/or the second period to the terminal.

Optionally, the network device may indicate the first period and/or the second period to the terminal through a system message and/or a first signaling. Optionally, the system message may be, for example, a master information block (MIB) and/or a system information block (SIB). The first signaling may be, for example, an RRC signaling.

In **step 2103**, the network device determines a corresponding relationship between a first signal and a second signal based on the first number N and the second number M.

Optionally, in some embodiments, the first number N may be: the number of the first signals in the first period, the second number M may be: the number of the second signals in the second period, N and M are positive integers; where the first signal and the second signal that have a corresponding relationship share the same beam. That is, if the initial first signal in the first period has a corresponding relationship with the initial first signal in the second period, then the initial first signal in the first period and the initial first signal in the second period share the same beam for transmission.

Optionally, the network device may determine the corresponding relationship based on a protocol agreement, and/or the network device may determine (e.g., autonomously determine) the corresponding relationship.

Optionally, the corresponding relationship between the first signal and the second signal may be any one of the following types.

In the first type: the first number N is equal to the second number M, and it is determined that there is a corresponding relationship between the i-th first signal in the first period and the i-th second signal in the second period, where i is a positive integer.

For example, when the first number N is equal to the second number N, it means that the number of the first signals in the first period is the same as the number of the second signals in the second period. At this time, the initial first signal in the first period can correspond to the initial second signal in the second period, the second first signal in the first period can correspond to the second second signal in the second period, the third first signal in the first period can correspond to the third second signal in the second period, and so on.

The following example is taken as an example in which the first signal set is LP SS set, the first signal is LP SS, the first period is LP SS period, the second signal set is SSB set, the second signal is SSB, and the second period is a synchronization period. The subsequent examples are also based on this premise.

In some examples, FIG. 2A2 is a schematic diagram of the corresponding relationship between the first signal and the second signal according to an embodiment of the present disclosure. As shown in FIG. 2A2 , the synchronization period (i.e., the aforementioned second period) is 20 ms (milliseconds), and the LP SS period (i.e., the aforementioned first period) is 40 ms. In the synchronization period, one period includes one SSB set (i.e., the aforementioned second signal set), and one SSB set includes two SSBs (i.e., the aforementioned second signal). In the LP SS period (i.e., the aforementioned first period), one period includes two LP SSs (i.e., the aforementioned first signal), which are respectively located in different synchronization periods. SSB0 (i.e., the initial second signal in the aforementioned second period) corresponds to LP SS0 (i.e., the initial first signal in the aforementioned first period), and they share the same beam. SSB1 (i.e., the second second signal in the aforementioned second period) corresponds to LP SS1 (i.e., the second first signal in the aforementioned first period), and they share the same beam.

In other examples, FIG. 2A3 is a schematic diagram of the corresponding relationship between the first signal and the second signal according to an embodiment of the present disclosure. As shown inFIG. 2A3, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are respectively located in different synchronization periods. SSB0 corresponds to LP SS0 and shares the same beam. SSB1 corresponds to LP SS1 and shares the same beam. In this example, LP SS does not necessarily exist in the synchronization period.

In the second type: the first number N is equal to the second number M, and the first signal set and the second signal set are located in the same half frame, and it is determined that there is a corresponding relationship between the i-th first signal in the first period and the i-th second signal in the second period, and i is a positive integer.

Optionally, the above "the first signal set and the second signal set are located in the same half frame" can be understood as the first signal set included in the first period and the second signal set included in the second period are located in the same half frame.

In some instances, FIG. 2A4 is a schematic diagram of the corresponding relationship between the first signal and the second signal according to an embodiment of the present disclosure. As shown iFIG. 2A4, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period and in the same half frame as the SSB set. SSB0 corresponds to LP SS0 and shares the same beam. SSB1 corresponds to LP SS1 and shares the same beam. In this example, LP SS does not necessarily exist in the synchronization period.

In the third type: the first number N is equal to the second number M, and the first signal set and the second signal set are in the same frame, and it is determined that there is a corresponding relationship between the i-th first signal in the first period and the i-th second signal in the second period, where i is a positive integer.

Optionally, the above "the first signal set and the second signal set are located in the same frame" can be understood as the first signal set included in the first period and the second signal set included in the second period are located in the same frame.

In some instances, FIG. 2A5 is a schematic diagram of the corresponding relationship between the first signal and the second signal according to an embodiment of the present disclosure. As shown in FIG. 2A5, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period and in the same frame as the SSB set, but in different half frames. SSB0 corresponds to LP SS0 and shares the same beam. SSB1 corresponds to LP SS1 and shares the same beam. In this example, LP SS does not necessarily exist in the synchronization period.

In some instances, FIG. 2A6 is a schematic diagram of the corresponding relationship between the first signal and the second signal according to an embodiment of the present disclosure. As shown in FIG. 2A6, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period and in the same frame as the SSB set, but part of them is located in a different half frame from the SSB set, and part of them is located in the same half frame as the SSB set. SSB0 corresponds to LP SS0 and shares the same beam. SSB1 corresponds to LP SS1 and shares the same beam. In this example, LP SS does not necessarily exist in the synchronization period.

In the fourth type: the first number N is equal to the second number M, and the first signal set is in the second period, and it is determined that there is a corresponding relationship between the i-th first signal in the first period and the i-th second signal in the second period, where i is a positive integer.

Optionally, the above-mentioned "the first signal set is located in the second period" can be understood as the first signal set included in the first period is located in the second period.

In some instances, FIG. 2A7 is a schematic diagram of the corresponding relationship between the first signal and the second signal according to an embodiment of the present disclosure. As shown in FIG. 2A7, the synchronization period is 20 ms, and the LP SS period is 40 ms, that is, one LP SS period corresponds to two synchronization periods. In the synchronization period, one period includes one SSB set, and one SSB set includes two SSBs. In the LP SS period, one period includes two LP SSs, which are located in the same SSB synchronization period. SSB0 corresponds to LP SS0 and shares the same beam. SSB1 corresponds to LP SS1 and shares the same beam. In this example, LP SS does not necessarily exist in the synchronization period.

In the fifth type: the first number N is less than the second number M, and it is determined that the N first signals in the first period respectively have the corresponding relationship with any N second signals in the second period.

Optionally, the above-mentioned "determining that the N first signals in the first period respectively have the corresponding relationship with any N second signals in the second period" can, for example, be: determining that the N first signals in the first period respectively have the corresponding relationship with the first N second signals in the second period, for example, the initial first signal in the first period can have the corresponding relationship with the initial first signal in the second period, the second first signal in the first period can have the corresponding relationship with the second first signal in the second period, the third first signal in the first period can have the corresponding relationship with the third first signal in the second period, and so on.

Alternatively, optionally, the above-mentioned "determining that the N first signals in the first period respectively have the corresponding relationship with the last N second signals in the second period" may, for example, be: determining that the N first signals in the first period respectively have the corresponding relationship with the first N second signals in the second period, for example, the initial first signal in the first period may have the corresponding relationship with the N-th last first signal in the second period, the second first signal in the first period may have the corresponding relationship with the (N-1)-th last first signal in the second period, the third first signal in the first period may have the corresponding relationship with the (N-2)th last first signal in the second period, and so on.

In some instances, FIG. 2A8 is a schematic diagram of the corresponding relationship between the first signal and the second signal according to an embodiment of the present disclosure. As shown in FIG. 2A8, the synchronization period is 20 ms and the LP SS period is 40 ms. In the synchronization period, one period includes one SSB set, and one SSB set includes two SSBs. In the LP SS period, one period includes one LP SS, which are respectively located in different synchronization periods. SSB0 corresponds to LP SS0 and they share the same beam.

In some instances, FIG. 2A9 is a schematic diagram of the corresponding relationship between the first signal and the second signal according to an embodiment of the present disclosure. As shown in FIG. 2A9 , the synchronization period is 10 ms, and the LP SS period is 40 ms, that is, one LP SS period corresponds to four synchronization periods. In the synchronization period, one SSB set is included in one period, and one SSB set includes two SSBs. In the LP SS period, one LP SS is included in one period. SSB0 corresponds to LP SS0, and they share the same beam. In this example, LP SS does not necessarily exist in the synchronization period.

In the sixth type: the first number N is less than the second number M, and the first signal set and the second signal set are located in the same half frame, and it is determined that the N first signals in the first period have the corresponding relationship with any N second signals in the second period, respectively.

In some instances, FIG. 2A10 is a schematic diagram of the corresponding relationship between the first signal and the second signal according to an embodiment of the present disclosure. As shown in FIG. 2A10, the synchronization period is 10 ms, and the LP SS period is 40 ms, that is, one LP SS period corresponds to 4 synchronization periods. In the synchronization period, one period includes one SSB set, and one SSB set includes 4 SSBs. In the LP SS period, one period includes 2 LP SSs, which are located in the same half frame as the SSB set. SB0 corresponds to LP SS0 and they share the same beam. SSB1 corresponds to LP SS1 and they share the same beam. In this example, LP SS does not necessarily exist in the synchronization period.

In the seventh type: the first number N is less than the second number M, and the first signal set and the second signal set are located in the same frame, and it is determined that the N first signals in the first period have the corresponding relationship with any N second signals in the second period, respectively.

In some instances, FIG. 2A11 is a schematic diagram of the corresponding relationship between the first signal and the second signal according to an embodiment of the present disclosure. As shown in FFIG. 2A11, the synchronization period is 10 ms, and the LP SS period is 40 ms, that is, one LP SS period corresponds to four synchronization periods. In the synchronization period, one period includes one SSB set, and one SSB set includes four SSBs. In the LP SS period, one period includes two LP SSs, which are located in the same synchronization period and in the same frame as the SSB set, but in different half frames. SSB0 corresponds to LP SS0, and they share the same beam. SSB1 corresponds to LP SS1, and they share the same beam. In this example, LP SS does not necessarily exist in the synchronization period.

In some instances, FIG. 2A12 is a schematic diagram of the corresponding relationship between the first signal and the second signal according to an embodiment of the present disclosure. As shown in, FIG. 2A12 , in the synchronization period, one SSB set is included in one period, and one SSB set includes 4 SSBs. In the LP SS period, one period includes two LP SSs, which are located in the same synchronization period and in the same frame as the SSB set, some of which are located in a half frame different from the SSB set, and some of which are located in the same half frame as the SSB set. SSB0 corresponds to LP SS0 and they share the same beam. SSB1 corresponds to LP SS1 and they share the same beam. In this example, LP SS does not necessarily exist in the synchronization period.

In the eighth type: the first number N is less than the second number M, and the first signal set is located in the second period, and it is determined that the N first signals in the first period respectively have the corresponding relationship with any N second signals in the second period.

In some instances, FIG. 2A13 is a schematic diagram of the corresponding relationship between the first signal and the second signal according to an embodiment of the present disclosure. As shown inFIG. 2A13, the synchronization period is 20 ms, and the LP SS period is 40 ms, that is, one LP SS period corresponds to two synchronization periods. In the synchronization period, one period includes one SSB set, and one SSB set includes two SSBs. In the LP SS period, one period includes one LP SS, which is located in the same SSB synchronization period. SSB0 corresponds to LP SS0 and they share the same beam. In this example, LP SS does not necessarily exist in the synchronization period.

In **step 2104**, the network device indicates the corresponding relationship between the first signal and the second signal to the terminal.

Optionally, the network device may indicate the corresponding relationship between the first signal and the second signal to the terminal through a system message and/or a first signaling.

In **step 2105**, the terminal determines the first period and the second period.

Optionally, for a detailed introduction to the first period and the second period, reference may be made to the above steps.

Optionally, the method for the terminal to determine the first period and the second period may include at least one of the following:
determining the first period and the second period based on the protocol agreement;
receiving the first period and the second period indicated by the network device;
receiving the first period indicated by the network device, and determining the second period based on a protocol agreement;
receiving the second period indicated by the network device, and determining the first period based on a protocol agreement.

In **step 2106**, the terminal determines the corresponding relationship between the first signal and the second signal.

Optionally, for a detailed introduction to the corresponding relationship between the first signal and the second signal, reference may be made to the above steps.

Optionally, the method for the terminal to determine the corresponding relationship between the first signal and the second signal may include at least one of the following:
determining the corresponding relationship based on a protocol agreement;
receiving the corresponding relationship indicated by the network device.

In **step 2107**, the network device determines a beam corresponding to the second signal.

Optionally, the network device may determine the beam corresponding to the second signal based on a protocol agreement and/or the network device.

In **step 2108**, the network device indicates the beam corresponding to the second signal to the terminal.

Optionally, the network device may indicate the beam corresponding to the second signal to the terminal through a system message and/or RRC signaling.

In **step 2109**, the terminal determines the beam corresponding to the second signal.

Optionally, the terminal may determine the beam corresponding to the second signal based on a protocol agreement, and/or the terminal may determine the beam corresponding to the second signal based on an indication of the network device. Alternatively, in some embodiments, the beam used by the second signal can be determined by the terminal through blind detection when initially accessing the network.

In **step 2110**, the network device sends a first signal having the corresponding relationship with the second signal based on the beam corresponding to the second signal.

Optionally, the terminal may receive a first signal having the corresponding relationship with the second signal based on the beam corresponding to the second signal.

In the above embodiment, a method for determining the corresponding relationship between a first signal and a second signal is provided, where the first signal and the second signal having a corresponding relationship share the same beam, and since the beam used by the second signal can be predetermined by the terminal (for example, it can be determined by blind detection when the terminal initially accesses the network), the network device can send the first signal having a corresponding relationship with the second signal based on the beam corresponding to the second signal according to the corresponding relationship, and the terminal can receive the first signal having a corresponding relationship with the second signal based on the beam corresponding to the second signal according to the corresponding relationship, thereby achieving successful transmission of the first signal.

The determination method involved in the embodiments of the present disclosure may include at least one of steps S2101 to S2109. For example, step S2101 may be implemented as an independent embodiment, step S2102 may be implemented as an independent embodiment, step S2103 may be implemented as an independent embodiment, and steps S2101+S2102 may be implemented as an independent embodiment, but are not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

FIG. 3A is an interactive schematic diagram of a determination method according to an embodiment of the present disclosure. As shown in FIG. 3A, an embodiment of the present disclosure relates to a determination method, which is applied in a terminal, and the method includes the following steps.

In **step 3101**, the terminal determines a first period and a second period.

In **step 3102**, the terminal determines a corresponding relationship between a first signal and a second signal.

In **step 3103**, the terminal determines a beam corresponding to the second signal.

In **step 3104**, the terminal receives the first signal having the corresponding relationship with the second signal based on the beam corresponding to the second signal.

For a detailed description of steps 3101 to 3104, reference may be made to the description of the above embodiments.

The determination method involved in the embodiment of the present disclosure may include at least one of steps S3101 to S3104. For example, step S3101 may be implemented as an independent embodiment, step S3102 may be implemented as an independent embodiment, and steps S3101+S3102 may be implemented as an independent embodiment, but are not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

FIG. 3B is an interactive schematic diagram of a determination method according to an embodiment of the present disclosure. As shown in FIG3. B, an embodiment of the present disclosure relates to a determination method, which is applied to a terminal, and the method includes the following steps.

In **step 3201**, the terminal determines a first period and a second period.

In **step 3202**, the terminal determines a corresponding relationship between a first signal and a second signal based on a first number N and a second number M.

Optionally, the first period is the transmission period of the first signal set, and the second period is the transmission period of the second signal set; the first signal set includes at least one first signal, and the second signal set includes at least one second signal; the first signal is at least used to achieve time and frequency synchronization when receiving a third signal, and the third signal is used for at least one of the following: waking up the main radio (MR) of the terminal, not waking up the MR, and changing the sleep state of the MR; the second signal is used for time and frequency synchronization between the terminal and the network device.

Optionally, the first number N is: the number of the first signals in the first period, and the second number M is: the number of the second signals in the second period; the first signal and the second signal that have the corresponding relationship share the same beam, and N and M are positive integers.

Optionally, determining the first period and the second period includes at least one of the following:
determining the first period and the second period based on a protocol agreement;
receiving the first period and the second period indicated by the network device;
receiving the first period indicated by the network device, and determining the second period based on a protocol agreement;
receiving the second period indicated by the network device, and determining the first period based on a protocol agreement.

Optionally, the first period includes at least one second period; or
the first period includes at least one second period, and the starting position of the first period is the same as the starting position of the second period; or
the first period is an integer multiple of the second period; or
the first period is an integer multiple of the second period, and a starting position of the first period is the same as a starting position of the second period.

Optionally, determining the corresponding relationship between the first signal and the second signal based on the first number N and the second number M includes at least one of the following:
the first number N being equal to the second number M, determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in a same frame, determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

Optionally, the method further includes:
the terminal determining a beam corresponding to the second signal based on a protocol agreement and/or a configuration of the network device;
the terminal receiving a first signal having the corresponding relationship with the second signal based on the beam corresponding to the second signal.

For a detailed description of steps 3201 to 3202, reference may be made to the description of the above embodiments.

The determination method involved in the embodiment of the present disclosure may include at least one of step S3201 to step S3202. For example, step S3201 may be implemented as an independent embodiment, step S3202 may be implemented as an independent embodiment, and step S3201+S3202 may be implemented as an independent embodiment, but is not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

FIG. 4A is an interactive schematic diagram of a determination method according to an embodiment of the present disclosure. As shown in FIG. 4A, an embodiment of the present disclosure relates to a determination method for a network device, and the method includes the following steps.

In **step 4101**, the network device determines a first period and a second period.

In **step 4102**, the network device determines a corresponding relationship between a first signal and a second signal.

In **step 4103**, the network device determines a beam corresponding to the second signal.

In **step 4104**, the network device sends a first signal having the corresponding relationship with the second signal based on the beam corresponding to the second signal.

For a detailed description of steps 4101 to 4104, reference may be made to the description of the above embodiments.

The determination method involved in the embodiment of the present disclosure may include at least one of steps S4101 to S4104. For example, step S4101 may be implemented as an independent embodiment, step S4102 may be implemented as an independent embodiment, and steps S4101+S4102 may be implemented as an independent embodiment, but is not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

FIG. 4B is an interactive schematic diagram of a determination method according to an embodiment of the present disclosure. As shown in FIG. 4B, an embodiment of the present disclosure relates to a determination method, which is applied to a network device, and the method includes the following steps.

In **step 4201**, the network device determines a first period and a second period.

In **step 4202**, the network device determines a corresponding relationship between a first signal and a second signal based on a first number N and a second number M.

Optionally, the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up the main radio (MR) of the terminal, not waking up the MR, changing the sleep state of the MR; the second signal is used for the terminal to perform time and frequency synchronization with the network device;
Optionally, the first number N is: the number of the first signals in the first period, and the second number M is: the number of the second signals in the second period; the first signal and the second signal that have a corresponding relationship share the same beam, and N and M are positive integers.

Optionally, determining the first period and the second period includes at least one of the following:
determining the first period and the second period based on a protocol agreement;
the network device determining the first period and the second period;
the network device determining the first period, and determining the second period based on a protocol agreement;
the network device determining the second period, and determining the first period based on a protocol agreement.

Optionally, the method further includes:
the network device indicating the first period and/or the second period to the terminal.

Optionally, the first period includes at least one second period; or
the first period includes at least one second period, and the starting position of the first period is the same as the starting position of the second period; or
the first period is an integer multiple of the second period; or
the first period is an integer multiple of the second period, and a starting position of the first period is the same as a starting position of the second period.

Optionally, determining the corresponding relationship between the first signal and the second signal based on the first number N and the second number M includes at least one of the following:
the first number N being equal to the second number M, determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in a same frame, determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

Optionally, the method further includes:
the network device determining the beam corresponding to the second signal based on a protocol agreement and/or the network device;
the network device sending a first signal having the corresponding relationship with the second signal based on the beam corresponding to the second signal.

Optionally, the method further includes:
the network device configuring a beam corresponding to the second signal to the terminal.

For a detailed description of steps 4201 to 4202, reference may be made to the description of the above embodiments.

The determination method involved in the embodiment of the present disclosure may include at least one of steps S4201 to S4204. For example, step S4201 may be implemented as an independent embodiment, step S4202 may be implemented as an independent embodiment, and step S4201+S4202 may be implemented as an independent embodiment, but is not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

FIG. 5A is an interactive schematic diagram of a determination method according to an embodiment of the present disclosure. As shown in FIG. 5A, an embodiment of the present disclosure relates to a determination method, which is applied in a communication system including a terminal and a network device, and the method includes at least one of the following steps.

In **step 5101**, the network device determines a first period and a second period.

In **step 5102**, the network device determines a corresponding relationship between a first signal and a second signal based on the first number N and the second number M.

In **step 5103**, the network device determines a beam corresponding to the second signal based on a protocol agreement and/or the network device.

In **step 5104**, the network device sends a first signal having the corresponding relationship with the second signal based on the beam corresponding to the second signal.

In **step 5105**, the terminal determines the first period and the second period.

In **step 5106**, the terminal determines a corresponding relationship between the first signal and the second signal based on the first number N and the second number M.

In **step 5107**, the terminal determines a beam corresponding to the second signal based on a protocol agreement and/or the configuration of a network device.

In **step 5108**, the terminal receives a first signal having the corresponding relationship with the second signal based on the beam corresponding to the second signal.

The optional implementations of steps 5101 to 5108 can be found in the introduction to the above embodiments.

In some embodiments, the above method may include the method described in the above embodiments of the communication system side, terminal side, network device side, etc., which are not repeated here.

The determination method involved in the embodiment of the present disclosure may include at least one of steps S5101 to S5108. For example, step S5101 may be implemented as an independent embodiment, and step S5102 may be implemented as an independent embodiment, but is not limited thereto.

In this implementation or embodiment, unless there is any contradiction, each step can be independent, arbitrarily combined or exchanged in order, the optional manners or optional examples can be arbitrarily combined, and can be arbitrarily combined with any steps of other implementations or other embodiments.

The following is an exemplary introduction to the above methods.

### First embodiment

In a network, the base station can wake up the terminals supporting LP WUS in the cell or change the sleep state of these terminals by sending LP WUS. For the terminals supporting LP WUS, at least one LP WUS signal is received through LP WUR, and the wake-up or sleep state change of MR is completed according to the information carried by the received LP WUS signal. The change of the sleep state of MR refers to the mutual switching among ultra-deep sleep, deep sleep, light sleep, micro sleep and other states, and the wake-up of MR refers to the conversion of MR from any sleep state to the wake-up state. Before receiving LP WUS, the UE's LP WUR attempts to receive LP SS to obtain auxiliary information of LP WUS, such as time-frequency synchronization information, cell ID information, etc. The base station sends the LP SS according to the protocol definition configuration or the configuration indicated by the base station to at least one UE, and the UE monitors the LP SS according to the protocol predefined configuration or the configuration of the base station.

Based on the above, the protocol predefines an LP SS set pattern, where the LP SS set includes at least one LP SS and occupies at least one slot. Furthermore, the corresponding relationship between the LP SS in the LP SS period and the SSB in one synchronization period includes at least one of the following.

In some embodiments, the number of LP SSs in the LP SS period is the same as the number of SSBs in one synchronization period, and the first LP SS in the LP SS period corresponds to the beam of the first SSB of the synchronization period, the second LP SS in the LP SS period corresponds to the beam of the second SSB of the synchronization period, and so on.

For example, as shown in FIG. 2A2 above, under certain conditions, the synchronization period is 20 ms and the LP SS period is 40 ms. In the synchronization period, one period includes one SSB set, and one SSB set includes two SSBs. In the LP SS period, one period includes two LP SSs, which are located in different synchronization periods. SSB0 corresponds to LP SS0 and shares the same beam. SSB1 corresponds to LP SS1 and shares the same beam.

For example, as shown in FIG. 2A3 above, under certain conditions, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are respectively located in different synchronization periods. SSB0 corresponds to LP SS0 and shares the same beam. SSB1 corresponds to LP SS1 and shares the same beam. In this example, LP SS may not exist in the synchronization period.

In some embodiments, the number of LP SSs in an SSB half-frame is the same as the number of SSBs in one synchronization period, and the first LP SS in the LP SS period corresponds to the beam of the first SSB of the synchronization period, the second LP SS in the LP SS period corresponds to the beam of the second SSB of the synchronization period, and so on.

For example, as shown in FIG. 2A4 above, under certain conditions, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period and in the same half frame as the SSB set. SSB0 corresponds to LP SS0 and shares the same beam. SSB1 corresponds to LP SS1 and shares the same beam. In this example, LP SS may not exist in the synchronization period.

In some embodiments, the number of LP SSs in the frame where the SSBs is located is the same as the number of SSBs in one synchronization period, and the first LP SS in the LP SS period corresponds to the beam of the first SSB in the synchronization period, and the second LP SS in the LP SS period corresponds to the beam of the second SSB in the synchronization period, and so on.

For example, as shown in FIG. 2A5 above, under certain conditions, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period and in a different half frame from the SSB set. SSB0 corresponds to LP SS0 and shares the same beam. SSB1 corresponds to LP SS1 and shares the same beam. In this example, LP SS may not exist in the synchronization period.

For example, as shown in FIG. 2A6 above, under certain conditions, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes two LP SSs, which are located in the same synchronization period, some of which are located in a different half-frame from the SSB set, and some of which are located in the same half-frame as the SSB set. SSB0 corresponds to LP SS0 and shares the same beam. SSB1 corresponds to LP SS1 and shares the same beam. In this example, LP SS does not necessarily exist in the synchronization period.

In some embodiments, the number of LP SSs in the SSB synchronization period is the same as the number of SSBs in one synchronization period, and the first LP SS in the LP SS period corresponds to the beam of the first SSB in the synchronization period, the second LP SS in the LP SS period corresponds to the beam of the second SSB in the synchronization period, and so on.

For example, as shown in FIG. 2A7 above, under certain conditions, the synchronization period is 20 ms, and the LP SS period is 40 ms, that is, one LP SS period corresponds to two synchronization periods. In the synchronization period, one period includes one SSB set, and one SSB set includes two SSBs. In the LP SS period, one period includes two LP SSs, which are located in the same SSB synchronization period. SSB0 corresponds to LP SS0 and shares the same beam. SSB1 corresponds to LP SS1 and shares the same beam. In this example, LP SS may not exist in the synchronization period.

In some embodiments, the number n of LP SSs in the LP SS period is less than the number m of SSBs in one synchronization period, and the LP SSs in the LP SS period respectively correspond to the beams of the first n SSBs of the synchronization period. Specifically, the first LP SS in the LP SS period corresponds to the beam of the first SSB of the synchronization period, the second LP SS in the LP SS period corresponds to the beam of the second SSB of the synchronization period, and so on.

For example, as shown in FIG. 2A8 above, under certain conditions, the synchronization period is 20ms and the LP SS period is 40ms. In the synchronization period, one period includes one SSB set, and one SSB set includes two SSBs. In the LP SS period, one period includes one LP SS, which are located in different synchronization periods. SSB0 corresponds to LP SS0 and shares the same beam.

For example, as shown in FIG. 2A9 above, under certain conditions, the synchronization period is 10 ms, and the LP SS period is 40 ms, that is, one LP SS period corresponds to four synchronization periods. In the synchronization period, one period includes one SSB set, and one SSB set includes two SSBs. In the LP SS period, one period includes one LP SS. SSB0 corresponds to LP SS0 and shares the same beam. In this example, there is not necessarily an LP SS in the synchronization period.

In some embodiments, the number n of LP SSs located in the SSB half frame is less than the number m of SSBs in one synchronization period, and the LP SSs in the LP SS period respectively correspond to the beams of the first n SSBs of the synchronization period. Specifically, the first LP SS in the LP SS period corresponds to the beam of the first SSB of the synchronization period, the second LP SS in the LP SS period corresponds to the beam of the second SSB of the synchronization period, and so on.

For example, as shown in FIG. 2A10 above, under certain conditions, the synchronization period is 10 ms and the LP SS period is 40 ms, that is, one LP SS period corresponds to four synchronization periods. In the synchronization period, one period includes one SSB set, and one SSB set includes four SSBs. In the LP SS period, one period includes two LP SSs, which are located in the same half frame as the SSB set. SB0 corresponds to LP SS0 and shares the same beam. SSB1 corresponds to LP SS1 and shares the same beam. In this example, there may not be LP SS in the synchronization period.

In some embodiments, the number n of LP SSs in the frame where the SSB is located is less than the number m of SSBs in one synchronization period, and the LP SSs in the LP SS period respectively correspond to the beams of the first n SSBs of the synchronization period. Specifically, the first LP SS in the LP SS period corresponds to the beam of the first SSB of the synchronization period, the second LP SS in the LP SS period corresponds to the beam of the second SSB of the synchronization period, and so on.

For example, as shown in FIG. 2A11 above, under certain conditions, the synchronization period is 10ms, and the LP SS period is 40ms, that is, one LP SS period corresponds to 4 synchronization periods. In the synchronization period, one period includes one SSB set, and one SSB set includes 4 SSBs. In the LP SS period, one period includes 2 LP SSs, which are located in the same synchronization period and in a different half frame from the SSB set. SSB0 corresponds to LP SS0 and shares the same beam. SSB1 corresponds to LP SS1 and shares the same beam. In this example, LP SS does not necessarily exist in the synchronization period.

For example, as shown in FIG. 2A12 above, under certain conditions, the synchronization period is 10ms, and the LP SS period is 40ms, that is, one LP SS period corresponds to 4 synchronization periods. In the synchronization period, one period includes one SSB set, and one SSB set includes 4 SSBs. In the LP SS period, one period includes two LP SSs, which are located in the same synchronization period, some of which are located in a different half-frame from the SSB set, and some of which are located in the same half-frame as the SSB set. SSB0 corresponds to LP SS0 and shares the same beam. SSB1 corresponds to LP SS1 and shares the same beam. In this example, LP SS does not necessarily exist in the synchronization period.

In some embodiments, the number n of LP SSs located in the SSB synchronization period is less than the number m of SSBs in one synchronization period, and the LP SSs in the LP SS period respectively correspond to the beams of the first n SSBs of the synchronization period. Specifically, the first LP SS in the LP SS period corresponds to the beam of the first SSB of the synchronization period, the second LP SS in the LP SS period corresponds to the beam of the second SSB of the synchronization period, and so on.

For example, as shown in FIG. 2A13 above, under certain conditions, the synchronization period is 20ms and the LP SS period is 40ms, that is, one LP SS period corresponds to two synchronization periods. In the synchronization period, one period includes one SSB set, and one SSB set includes two SSBs. In the LP SS period, one period includes one LP SS, which is located in the same SSB synchronization period. SSB0 corresponds to LP SS0 and shares the same beam. In this example, there is not necessarily an LP SS in the synchronization period.

### Second embodiment

In a network, the base station can wake up terminals supporting LP WUS in a cell or change the sleep state of these terminals by sending LP WUS. For terminals supporting LP WUS, at least one LP WUS signal is received through LP WUR, and the wake-up or sleep state change of MR is completed according to the information carried by the received LP WUS signal. The change of sleep state of MR refers to the mutual switching among ultra-deep sleep, deep sleep, light sleep, micro sleep and other states, and the wake-up of MR refers to the conversion of MR from any sleep state to the wake-up state. Before the UE receives LP WUS, its LP WUR attempts to receive LP SS to obtain auxiliary information of LP WUS, such as time-frequency synchronization information, cell ID information, etc. The base station configures the LP SS according to the protocol definition or the configuration indicated by the base station to at least one UE. The UE monitors the LP SS according to the predefined configuration of the protocol or the configuration of the base station.

Based on the above, the protocol predefines an LP SS set pattern, where the LP SS set includes at least one LP SS and occupies at least one slot. Further, the method for coordinating the LP SS period with the SSB synchronization period includes at least one of the following.

In some embodiments, the LP SS period includes at least one SSB synchronization period.

In some embodiments, the LP SS period includes at least one SSB synchronization period, and the starting position of the SSB synchronization period is the same as the starting position of the LP SS period.

In some embodiments, the LP SS period is an integer multiple of the SSB synchronization period.

In some embodiments, the LP SS period is an integer multiple of the SSB synchronization period, and the starting position of the SSB synchronization period is the same as the starting position of the LP SS period.

The embodiments of the present disclosure also propose an apparatus for implementing any of the above methods, for example, an apparatus is proposed, the above apparatus includes a unit or module for implementing each step performed by the terminal in any of the above methods. For another example, another apparatus is also proposed, including a unit or module for implementing each step performed by the network device (such as the access network device, the core network function node, the core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors; for example, in one implementation, the hardware circuits are application-specific integrated circuits (ASICs), and the functions of some or all of the above units or modules may be implemented by designing the logical relationship of the components in the circuits; for another example, in another implementation, the hardware circuits may be implemented by programmable logic devices (PLDs), and Field Programmable Gate Arrays (FPGAs) may be used as an example, which may include a large number of logic gate circuits, and the connection relationship between the logic gate circuits may be configured by configuring the configuration files, thereby implementing the functions of some or all of the above units or modules. All units or modules of the above apparatuses may be implemented in the form of software called by the processor, or in the form of hardware circuits, or in the form of software called by the processor, with the remaining part being implemented in the form of hardware circuits.

In the embodiments of the present disclosure, the processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP). In another implementation, the processor may implement certain functions through the logical relationship of the hardware circuit, and the logical relationship of the above hardware circuit is fixed or reconfigurable, such as a hardware circuit implemented by an application-specific integrated circuit (ASIC) or a programmable logic device (PLD), such as an FPGA. In a reconfigurable hardware circuit, the process of the processor loading the configuration document to realize hardware circuit configuration, can be understood as the process of loading instructions on the processor to realize the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

FIG. 6A is a schematic diagram of a structure of a terminal proposed in an embodiment of the present disclosure. As shown in FIG. 6A, the terminal includes:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and a network device;
the processing module is further configured to determine a corresponding relationship between the first signal and the second signal based on a first number N and a second number M; where the first number N is: the number of first signals in the first period, and the second number M is: the number of second signals in the second period; the first signal and the second signal that have a corresponding relationship share the same beam, and N and M are positive integers.

Optionally, the processing module is configured to execute the steps related to "processing" executed by the terminal in any of the above methods, and the terminal may further include at least one of a sending module and a receiving module, where the sending module is used to execute the steps related to "sending" executed by the terminal in any of the above methods. The receiving module is configured to execute the steps related to receiving executed by the terminal in any of the above methods, which will not be repeated here.

Optionally, the processing module is further configured to perform at least one of the following:
determining the first period and the second period based on a protocol agreement;
receiving the first period and the second period indicated by the network device;
receiving the first period indicated by the network device, and determining the second period based on a protocol agreement;
receiving the second period indicated by the network device, and determining the first period based on a protocol agreement.

Optionally, the first period includes at least one second period; or
the first period includes at least one second period, and the starting position of the first period is the same as the starting position of the second period; or
the first period is an integer multiple of the second period; or
the first period is an integer multiple of the second period, and a starting position of the first period is the same as a starting position of the second period.

Optionally, the processing module is further configured to perform at least one of the following:
the first number N being equal to the second number M, determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in a same frame, determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

Optionally, the processing module is further configured to determine a beam corresponding to the second signal based on a protocol agreement and/or a configuration of the network device;
the terminal further includes a receiving module, and the receiving module is further configured to receive a first signal having the corresponding relationship with the second signal based on the beam corresponding to the second signal.

FIG. 6B is a schematic diagram of a structure of a network device proposed in an embodiment of the present disclosure. As shown in FIG. 6B, it includes:
a processing module, configured to determine a first period and a second period; where the first period is a transmission period of a first signal set, and the second period is a transmission period of a second signal set; the first signal set includes at least one first signal, and the second signal set includes at least one second signal; the first signal is at least used to achieve time-frequency synchronization when receiving a third signal, and the third signal is used for at least one of the following: waking up a main radio (MR) of the terminal, not waking up the MR, and changing a sleep state of the MR; the second signal is used for time-frequency synchronization between the terminal and a network device;
the processing module is further configured to determine a corresponding relationship between the first signal and the second signal based on a first number N and a second number M; where the first number N is: the number of first signals in the first period, and the second number M is: the number of second signals in the second period; the first signal and the second signal that have a corresponding relationship share the same beam, and N and M are positive integers.

Optionally, the processing module is configured to execute the steps related to "processing" executed by the network device in any of the above methods, and the network device may further include at least one of a sending module and a receiving module, where the sending module is configured to execute the steps related to "sending" executed by the network device in any of the above methods. The receiving module is configured to execute the steps related to receiving executed by the network device in any of the above methods, which will not be repeated here.

Optionally, the processing module is further configured to perform at least one of the following:
determining the first period and the second period based on a protocol agreement;
the network device determining the first period and the second period;
the network device determining the first period, and determining the second period based on a protocol agreement;
the network device determining the second period, and determining the first period based on a protocol agreement.

Optionally, the network device further includes:
a sending module, for to indicate the first period and/or the second period to the terminal.

Optionally, the first period includes at least one second period; or
the first period includes at least one second period, and the starting position of the first period is the same as the starting position of the second period; or
the first period is an integer multiple of the second period; or
the first period is an integer multiple of the second period, and a starting position of the first period is the same as a starting position of the second period.

Optionally, the processing module is further configured to perform at least one of the following:
the first number N being equal to the second number M, determining that an i-th first signal in the first period and an i-th second signal in the second period have the corresponding relationship, where i is a positive integer;
the first number N being equal to the second number M, and the first signal set and the second signal set being located in a same half frame, determining that the i-th first signal in the first period and the i-th second signal in the second period have the corresponding relationship, where i is a positive integer;
the first number N being equal to the second number M, and the first signal set and the second signal set being located in a same frame, determining that the i-th first signal in the first period and the i-th second signal in the second period have the corresponding relationship, where i is a positive integer;
the first number N being equal to the second number M, and the first signal set being located in the second period, determining that the i-th first signal in the first period and the i-th second signal in the second period have the corresponding relationship, where i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

Optionally, the network device is further configured to:
determine a beam corresponding to the second is based on a protocol agreement and/or;
send a first signal having the corresponding relationship with the second signal based on the beam corresponding to the second signal.

Optionally, the sending module is further configured to:
configure a beam corresponding to the second signal for the terminal.

FIG. 7A is a schematic diagram of a structure of a communication device 7100 provided in an embodiment of the present disclosure. The communication device 7100 may be a network device (e.g., a network access device, a core network device, etc.), or a terminal (such as a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and the details may refer to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, a terminal device, a terminal device chip, a DU or a CU, etc.), execute a program, and process the data of the program. The processor 7101 is used to call instructions so that the communication device 7100 executes any of the above methods.

In some embodiments, the communication device 7100 further includes one or more memories 7102 for storing instructions. Optionally, all or part of the memory 7102 may also be outside the communication device 7100.

In some embodiments, the communication device 7100 further includes one or more transceivers 7103. When the communication device 7100 includes one or more transceivers 7103, the communication steps such as sending and receiving in the above methods are executed by the transceiver 7103, and the other steps are executed by the processor 7101.

In some embodiments, the transceiver may include a receiver and a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

Optionally, the communication device 7100 further includes one or more interface circuits 7104, which are connected to the memory 7102. The interface circuit 7104 can be used to receive signals from the memory 7102 or other apparatuses, and can be used to send signals to the memory 7102 or other apparatuses. For example, the interface circuit 7104 can read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7a. The communication device may be an independent device or may be part of a large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 7B is a schematic diagram of a structure of a chip 7200 provided in an embodiment of the present disclosure. In the case where the communication device 7100 may be a chip or a chip system, reference may be made to the schematic diagram of the structure of the chip 7200 shown in FIG. 7B, but the present disclosure is not limited thereto.

The chip 7200 includes one or more processors 7201, and the processor 7201 is used to call instructions so that the chip 7200 executes any of the above methods.

In some embodiments, the chip 7200 further includes one or more interface circuits 7202, which are connected to the memory 7203. The interface circuit 7202 can be used to receive signals from the memory 7203 or other apparatuses, and the interface circuit 7202 can be used to send signals to the memory 7203 or other apparatuses. For example, the interface circuit 7202 can read instructions stored in the memory 7203 and send the instructions to the processor 7201. Optionally, terms such as interface circuit, interface, transceiver pin, and transceiver may be used interchangeably.

In some embodiments, the chip 7200 further includes one or more memories 7203 for storing instructions. Optionally, all or part of the memory 7203 may be outside the chip 7200.

The present disclosure also proposes a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited thereto, and it can also be a storage medium readable by other apparatuses. Optionally, the storage medium can be a non-transitory storage medium, but is not limited thereto, and it can also be a temporary storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to execute any one of the above methods.

In the above embodiments, it can be implemented in whole or in part by software, hardware, firmware or any combination thereof. When implemented by software, it can be implemented in whole or in part in the form of a computer program product. The computer program product includes one or more computer programs. When the computer program is loaded and executed on a computer, the processes or functions described in the embodiments of the present disclosure are generated in whole or in part. The computer can be a general-purpose computer, a special-purpose computer, a computer network, or other programmable apparatus. The computer program can be stored in a computer-readable storage medium, or transmitted from one computer-readable storage medium to another computer-readable storage medium. For example, the computer program can be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer-readable storage medium can be any available medium that can be accessed by a computer or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)), etc.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of the present disclosure.

Those skilled in the art can clearly understand that, for the convenience and brevity of description, the specific working processes of the systems, apparatuses and units described above can refer to the corresponding processes in the aforementioned method embodiments and will not be repeated here.

The above is only the specific implementations of the present disclosure, but the protection scope of the present disclosure is not limited thereto. Any person skilled in the art who is familiar with the technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A determination method, comprising:
determining, by a terminal, a first period and a second period; wherein the first period is a transmission period of a first signal set, and the second period is a transmission period of a second signal set; the first signal set comprises at least one first signal, and the second signal set comprises at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and a network device; and
determining, by the terminal, a corresponding relationship between the first signal and the second signal based on a first number N and a second number M; wherein the first number N is: a number of the first signal in the first period, and the second number M is: a number of the second signal in the second period; the first signal and the second signal having the corresponding relationship share a same beam, and N and M are positive integers.

2. The method according to claim 1, wherein determining the first period and the second period comprises at least one of:
determining the first period and the second period based on a protocol agreement;
receiving the first period and the second period indicated by the network device;
receiving the first period indicated by the network device, and determining the second period based on a protocol agreement;
receiving the second period indicated by the network device, and determining the first period based on a protocol agreement.

3. The method according to claim 1 or 2, wherein the first period comprises at least one second period; or
the first period comprises at least one second period, and a starting position of the first period is the same as a starting position of the second period; or
the first period is an integer multiple of the second period; or
the first period is an integer multiple of the second period, and the starting position of the first period is the same as the starting position of the second period.

4. The method according to any one of claims 1 to 3, wherein determining the corresponding relationship between the first signal and the second signal based on the first number N and the second number M comprises at least one of:
the first number N being equal to the second number M, determining that an i-th first signal in the first period and an i-th second signal in the second period have the corresponding relationship, wherein i is a positive integer;
the first number N being equal to the second number M, and the first signal set and the second signal set being located in a same half frame, determining that the i-th first signal in the first period and the i-th second signal in the second period have the corresponding relationship, wherein i is a positive integer;
the first number N being equal to the second number M, and the first signal set and the second signal set being located in a same frame, determining that the i-th first signal in the first period and the i-th second signal in the second period have the corresponding relationship, wherein i is a positive integer;
the first number N being equal to the second number M, and the first signal set being located in the second period, determining that the i-th first signal in the first period and the i-th second signal in the second period have the corresponding relationship, wherein i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

5. The method according to any one of claims 1 to 4, wherein the method further comprises:
determining, by the terminal, a beam corresponding to the second signal based on a protocol agreement and/or a configuration of the network device;
receiving, by the terminal, the first signal having the corresponding relationship with the second signal based on the beam corresponding to the second signal.

6. A determination method, comprising:
determining, by a network device, a first period and a second period; wherein the first period is a transmission period of a first signal set, and the second period is a transmission period of a second signal set; the first signal set comprises at least one first signal, and the second signal set comprises at least one second signal; the first signal is at least used to achieve time-frequency synchronization when receiving a third signal, and the third signal is used for at least one of: waking up a main radio (MR) of a terminal, not waking up the MR, and changing a sleep state of the MR; the second signal is used for time-frequency synchronization between the terminal and the network device; and
determining, by the network device, a corresponding relationship between the first signal and the second signal based on a first number N and a second number M; wherein the first number N is: a number of the first signal in the first period, and the second number M is: a number of the second signal in the second period; the first signal and the second signal having the corresponding relationship share a same beam, and N and M are positive integers.

7. The method according to claim 6, wherein determining the first period and the second period comprises at least one of:
determining the first period and the second period based on a protocol agreement;
determining the first period and the second period by the network device;
determining the first period by the network device, and determining the second period based on a protocol agreement;
determining the second period by the network device, and determining the first period based on a protocol agreement.

8. The method according to claim 7, wherein the method further comprises:
indicating, by the network device, the first period and/or the second period to the terminal.

9. The method according to claim 7 or 8, wherein the first period comprises at least one second period; or
the first period comprises at least one second period, and a starting position of the first period is the same as a starting position of the second period; or
the first period is an integer multiple of the second period; or
the first period is an integer multiple of the second period, and the starting position of the first period is the same as the starting position of the second period.

10. The method according to any one of claims 6 to 9, wherein determining the corresponding relationship between the first signal and the second signal based on the first number N and the second number M comprises at least one of:
the first number N being equal to the second number M, determining that an i-th first signal in the first period and an i-th second signal in the second period have the corresponding relationship, wherein i is a positive integer;
the first number N being equal to the second number M, and the first signal set and the second signal set being located in a same half frame, determining that the i-th first signal in the first period and the i-th second signal in the second period have the corresponding relationship, wherein i is a positive integer;
the first number N being equal to the second number M, and the first signal set and the second signal set being located in a same frame, determining that the i-th first signal in the first period and the i-th second signal in the second period have the corresponding relationship, wherein i is a positive integer;
the first number N being equal to the second number M, and the first signal set being located in the second period, determining that the i-th first signal in the first period and the i-th second signal in the second period have the corresponding relationship, wherein i is a positive integer;
the first number N being less than the second number M, determining that N first signals in the first period have the corresponding relationship with any N second signals in the second period, respectively;
the first number N being less than the second number M, and the first signal set and the second signal set being located in the same half frame, determining that the N first signals in the first period have the corresponding relationship with any N second signals in the second period, respectively;
the first number N being less than the second number M, and the first signal set and the second signal set being located in the same frame, determining that the N first signals in the first period have the corresponding relationship with any N second signals in the second period, respectively; and
the first number N being less than the second number M, and the first signal set being located in the second period, determining that the N first signals in the first period have the corresponding relationship with any N second signals in the second period, respectively.

11. The method according to any one of claims 6 to 10, wherein the method further comprises:
determining, by the network device, a beam corresponding to the second signal based on a protocol agreement and/or the network device; and
sending, by the network device, the first signal having the corresponding relationship with the second signal based on the beam corresponding to the second signal.

12. The method according to claim 11, wherein the method further comprises:
configuring, by the network device, the beam corresponding to the second signal to the terminal.

13. A determination method, applied in a communication system, wherein the communication system comprises a terminal and a network device, and the method comprises at least one of:
the network device determining a first period and a second period; wherein the first period is a transmission period of a first signal set, and the second period is a transmission period of a second signal set; the first signal set comprises at least one first signal, and the second signal set comprises at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and the network device;
the network device determining a corresponding relationship between the first signal and the second signal based on a first number N and a second number M; wherein the first number N is a number of the first signal in the first period, and the second number M is a number of the second signal in the second period; the first signal and the second signal having the corresponding relationship share a same beam, and N and M are positive integers;
the network device determining a beam corresponding to the second signal based on a protocol agreement and/or the network device;
the network device sending the first signal having the corresponding relationship with the second signal based on the beam corresponding to the second signal;
the terminal determining the first period and the second period;
the terminal determining the corresponding relationship between the first signal and the second signal based on the first number N and the second number M;
the terminal determining the beam corresponding to the second signal based on a protocol agreement and/or a configuration of the network device; and
the terminal receiving the first signal having the corresponding relationship with the second signal based on the beam corresponding to the second signal.

14. A terminal, comprising at least one of:
a processing module, configured to determine a first period and a second period; wherein the first period is a transmission period of a first signal set, and the second period is a transmission period of a second signal set; the first signal set comprises at least one first signal, and the second signal set comprises at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between the terminal and a network device; and
wherein the processing module is further configured to determine a corresponding relationship between the first signal and the second signal based on a first number N and a second number M; wherein the first number N is: a number of the first signal in the first period, and the second number M is: a number of the second signal in the second period; the first signal and the second signal having the corresponding relationship share a same beam, and N and M are positive integers.

15. A network device, comprising at least one of:
a processing module, configured to determine a first period and a second period; wherein the first period is a transmission period of a first signal set, and the second period is a transmission period of a second signal set; the first signal set comprises at least one first signal, and the second signal set comprises at least one second signal; the first signal is at least used to achieve time-frequency synchronization when receiving a third signal, and the third signal is used for at least one of: waking up a main radio (MR) of the terminal, not waking up the MR, and changing a sleep state of the MR; the second signal is used for time-frequency synchronization between a terminal and the network device;
wherein the processing module is further configured to determine a corresponding relationship between the first signal and the second signal based on a first number N and a second number M; wherein the first number N is: a number of the first signal in the first period, and the second number M is: a number of the second signal in the second period; the first signal and the second signal having the corresponding relationship share a same beam, and N and M are positive integers.

16. A communication device, comprising:
one or more processors;
wherein the one or more processors are configured to call instructions so that the communication device executes the determination method according to any one of claims 1-5, 6-11.

17. A communication system, comprising a terminal and a network device, wherein the terminal is configured to implement the determination method according to any one of claims 1-5, and the network device is configured to implement the determination method according to any one of claims 6-12.

18. A storage medium storing instructions, wherein when the instructions are executed on a communication device, the communication device executes the determination method according to any one of claims 1-5 and 6-12.
